# EUROPÄISCHE PATENTSCHRIFT

(11) **EP 1 607 720 B1**
(45) Veröffentlichungstag und Bekanntmachung des Hinweises auf die Patenterteilung: **08.07.2009**
(21) Anmeldenummer: 05105285.0
(22) Anmeldetag: 16.06.2005
(51) Int. Cl.: G01D 5/245, B62D 15/02, G01D 5/14

(54) **Lenkwinkelsensor**
Steering angle sensor
Capteur d'angle de braquage

(30) Priorität: 18.06.2004 DE 102004030348; 17.12.2004 DE 102004062448
(43) Veröffentlichungstag der Anmeldung: 21.12.2005
(73) Patentinhaber: Valeo Schalter und Sensoren GmbH, 74321 Bietigheim-Bissingen (DE)
(72) Erfinder: Fröhlich, Ekkehart, 74226, Nordheim (DE); Jerems, Frank, 74369, Löchgau (DE); Rachui, Dirk, 74321, Bietigheim-Bissingen (DE); Ruetz, Christian, 71636, Ludwigsburg (DE); Schoepe, Roman, 74321, Bietigheim-Bissingen (DE); Proft, Matthias, 74936, Bönnigheim (DE)
(74) Vertreter: Vötsch, Reiner

(56) Entgegenhaltungen:
- DE-A1- 10 110 785
- DE-B3- 10 259 223
- DE-C1- 3 232 306
- DE-C1- 4 407 474
- DE-U1-3202004 002 27

## Beschreibung

Die Erfindung betrifft einen Lenkwinkelsensor nach dem Oberbegriff des Anspruchs 1, wie er aus der DE 101 10 785 C2 bekannt ist. Bei dem bekannten Lenkwinkelsensor wird ein Zählrad zur Bestimmung der Anzahl der Umdrehungen des Lenkrades berührungslos mittels Magnetfeldsensoren abgetastet. Ein derartiges System hat den Nachteil, dass bei ausgeschalteter Zündung ein Ruhestrom bereitgestellt werden muss, um ein Verdrehen des Lenkrades bei ausgeschalteter Zündung erkennen zu können. Bei dauerhafter Nichtbenutzung des Fahrzeuges führt dies zu einer unerwünschten Entleerung der Fahrzeugbatterie. Wird ein solcher Ruhestrom nicht bereitgestellt, kann der Lenkwinkel nicht mehr eindeutig bestimmt werden, wenn ein Verdrehen des Lenkrades bei ausgeschalteter Zündung oder abgeklemmter Batterie erfolgt.

Weiterhin ist aus dem DE 20 2004 002273 U1 ein Positionsdetektor bekannt, der eine Inkrementcodierung mit wenigstens einem Magnetabschnitt aufweist. Ferner hat der Positionsdetektor eine Zähleinheit, wobei die Zähleinheit eine Induktionsschleife, ein ferromagnetisches Element und einen Zählspeicher beinhaltet, und wobei beim Vorbeiführen des Magnetabschnitts an dem ferromagnetischen Element eine schlagartige Ummagnetisierung erfolgt, wodurch an der Induktionsschleife genügend elektrische Energie zur Aktivierung des Zählspeichers bereitstellbar ist.

Aufgabe der Erfindung ist es, den bekannten Lenkwinkelsensor derart weiterzubilden, dass auch nach ausgeschalteter Zündung oder abgeklemmter Batterie der richtige absolute Lenkwinkel zur Verfügung steht, wobei gleichzeitig ein besonders sicherer Betrieb bzw. eine besonders sichere Erkennung des Lenkwinkels mittels der Zähleinheit erzielt werden soll. Diese Aufgabe wird bei einem Lenkwinkelsensor mit den Merkmalen des Anspruchs 1 gelöst. Dabei wird es insbesondere durch die beiden über Kreuz angeordneten ferromagnetischen Elemente ermöglicht, dass genügend Energie zur Aktivierung des Zählspeichers bereitgestellt werden kann bzw. es denkbar ist, die beiden ferromagnetischen Elemente unabhängig voneinander elektrisch zu verschalten, wodurch aufgrund der redundanten Anordnung eine höhere Funktionssicherheit erzielt wird.

Vorteilhafte Weiterbildungen des erfindungsgemäßen Lenkwinkelsensors sind in den Unteransprüchen aufgeführt.

Um das Anordnen der beiden ferromagnetischen Elemente in weitgehend einer Ebene zu realisieren, kann vorteilhafterweise vorgesehen sein, dass die Spulenkörper einander zugewandte Ausnehmungen derart aufweisen, dass die Spulenkörper so ineinander gesetzt werden können, dass die ferromagnetischen Elemente wenigstens weitgehend in einer Ebene liegen. Derartige Spulenkörper können dann rechts und links neben den jeweiligen Ausnehmungen zwei Spulenabschnitte aufweisen, auf denen die jeweilige Spule angeordnet ist.

Gemäß einer weiteren vorteilhaften Ausführungsform der Erfindung ist vorgesehen, dass weitere elektronische Bauteile mit der von der Induktionsschleife bereitgestellten Energie betrieben werden. Dies hat den Vorteil, dass weitere Bauteile autark von der Fahrzeugbatterie beim Drehen des Lenkrades mit Strom versorgt werden können. Insbesondere können solche elektronischen Bauteile Drehrichtungssensoren zur Erkennung der Drehrichtung des Rotors sein. Als Drehrichtungssensoren kommen hierbei insbesondere Magnetfeldsensoren in Betracht, in deren Erfassungsbereich sich der Magnetabschnitt der Inkrementcodierung bewegt. Vorteilhafterweise sind dabei zwei Magnetfeldsensoren vorzusehen, die ein nicht 180° zueinander phasenversetztes Signal erzeugen. Als Magnetfeldsensoren kommen insbesondere digitale Hallsensoren oder magnetoresistive Sensoren in Betracht.

Besonders vorteilhaft ist, wenn bei dem erfindungsgemäßen Lenkwinkelsensor die Inkrementcodierung und die Winkelcodierung als lediglich eine ein- oder mehrteilige Magnetanordnung, die den Magnetabschnitt der Inkrementcodierung beinhaltet, ausgebildet ist. Insbesondere kann die Magnetanordnung als ein bipolarer Magnet, als eine multipolare Magnetscheibe oder als ein multipolarer Magnetring ausgebildet sein. Bei einer derartigen Ausführungsform wird die Inkrementcodierung und die Winkelcodierung folglich von den gleichen magnetischen Bauteilen gebildet, wodurch Bauraum und Bauteile eingespart werden. Die Abtasteinheit für die Winkelcodierung umfasst dann ebenfalls Magnetfeldsensoren, beispielsweise analoge Hallelemente oder als magnetoresistives Elemente.

Eine besonders bevorzugte Ausführungsform ergibt sich dann, wenn die Magnetanordnung, die Abtasteinheit und/oder das ferromagnetische Element im Bereich der Drehachse des Rotors angeordnet sind. Die rotorseitige Magnetanordnung kann dabei als kreisförmige Magnetscheibe ausgebildet sein, deren Mittellängsachse in der Drehachse des Rotors liegt. Der Rotor kann dabei insbesondere an dem freien Ende einer Welle angeordnet sein. Das sich bei Drehung des Rotors ändernde Magnetfeld der Magnetscheibe wird dann von der Abtasteinheit, die vorzugsweise auf einem Stator direkt in der Drehachse des Rotors angeordnet ist, zur Bestimmung des relativen relativen Drehwinkels erfasst. Da für das ebenfalls am Stator anzuordnende ferromagnetische Element, das beispielsweise oberhalb oder unterhalb der Abtasteinheit angeordnet sein kann, ein eher stabförmig auszubildender Magnet von Vorteil ist, kann vorgesehen sein, dass die Magnetanordnung zusätzlich zu der Magnetscheibe zwei oder mehr diametral einander gegenüberliegend angeordnete Einzelmagnetabschnitte umfasst. Eine derartige Anordnung beansprucht Bauraum in erster Linie in axialer Richtung, und kann deshalb in radialer Richtung sehr klein bauen.

Gemäß der Erfindung kann vorteilhafterweise eine Leiterplatte vorgesehen sein, auf der das ferromagnetische Element ggf. samt einem zugehörigen Spulenkörper und Spule, die Abtasteinheit, der Zählspeicher und, falls vorhanden, weitere Bauteile, wie beispielsweise Drehrichtungssensoren oder eine Auswerteeinheit zur Auswertung der Signale, angeordnet sind. Das Vorsehen der Leiterplatte mit den Bauteilen hat den Vorteil, dass die Bauteile auf der Leiterplatte als separate Baugruppe vormontiert werden können, bevor die Leiterplatte im Lenkwinkelsensor verbaut wird. Dabei können beispielsweise die Abtasteinheit zur Abtastung der Winkelcodierung auf der einen Seite der Leiterplatte angeordnet sein und das ferromagnetische Element samt Spulenkörper und Spule auf der anderen Seite der Leiterplatte. Dies ist insbesondere dann von Vorteil, wenn sämtliche Bauteile entlang der Drehachse des Rotors anzuordnen sind.

Für den Fall, dass als Winkelcodierung eine Magnetanordnung Verwendung findet, umfasst die Abtasteinheit vorteilhafterweise zwei bei Drehung des Rotors Sinus- und Kosinussignale erzeugende, analoge Magnetfeldsensoren, aus denen sich der relative Drehwinkel innerhalb einer Umdrehung, oder eines Umdrehungsabschnitts, des Rotors bestimmen lässt. Mit einer derartigen Anordnung können hohe Winkelauflösungen, die größer als 0,1 ° sein können, realisiert werden.

Weitere Einzelheiten und Ausgestaltungen der Erfindung sind der folgenden Beschreibung zu entnehmen, in der die Erfindung anhand der in der Zeichnung dargestellten Ausführungsbeispiele näher beschrieben und erläutert ist.

Es zeigen:
Figur 1 eine erste Ausführungsform eines nicht von der Erfindung umfassten Lenkwinkelsensors;
Figur 2 eine schematische Darstellung eines ferromagnetischen Elements;
Figur 2a einen Schnitt durch das ferromagnetische Element gemäß Figur 2;
Figur 3 eine zweite nicht von der Erfindung umfasste Ausführungsform ;
Figur 4 eine dritte Ausführungsform der Erfindung in Explosionsdarstellung;
Figur 5 die Draufsicht auf die Leiterplatte der Figur 4;
Figur 6 die Ausgangssignale der Abtasteinheit der Winkelcodierung zur Bestimmung des relativen Drehwinkels;
Figur 7 verschiedene Magnetanordnungen;
Figur 8 einen Spulenkörper der Ausführungsform gemäß Figur 4;
Figur 9 die beiden Spulenkörper der Ausführungsform gemäß Figur 4 in Einzelteildarstellung; und
Figur 10 die beiden Spulenkörper der Figur 4 in ineinander gesetztem Zustand auf einer Leiterplatte.

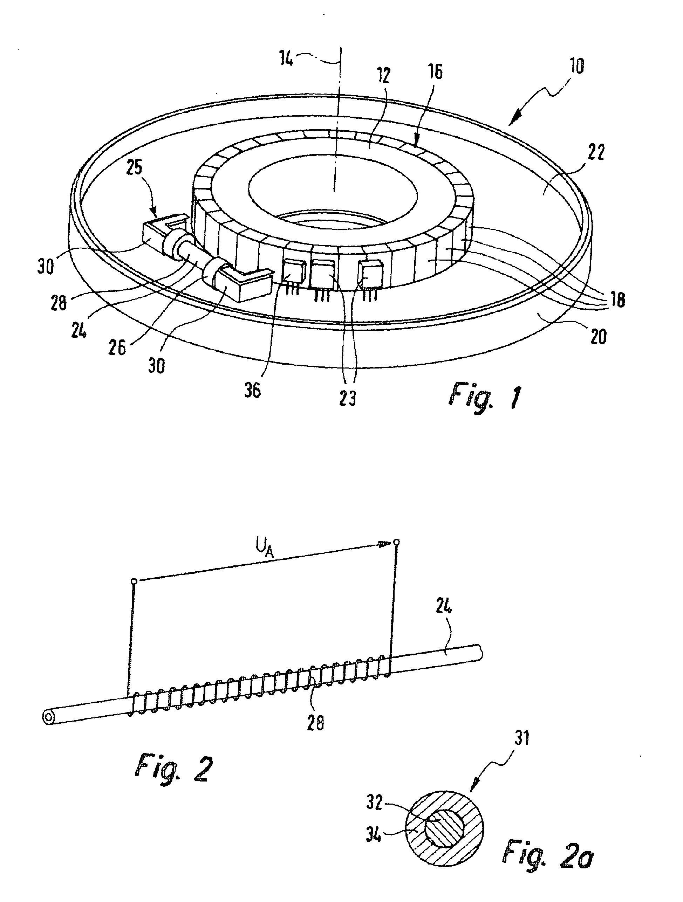

In der Figur 1 ist ein erster Lenkwinkelsensor 10 zur Bestimmung des absoluten Lenkwinkels β eines Fahrzeugs dargestellt. Der Sensor 10 umfasst einen Rotor 12, der mit einer nicht dargestellten Lenkwelle drehfest verbindbar ist. Die Drehachse der Lenkwelle und des Rotors 12 ist mit dem Bezugszeichen 14 gekennzeichnet. Der Rotor 12 weist an seinem radial außen liegenden Mantelbereich Magnetabschnitte 18 auf, die einen multipolaren Magnetring 16 bilden. Die Magnetabschnitte 18 in Form von Magnetpolsegmenten sind äquidistant zueinander angeordnet und haben eine wechselnde Polarisierung. Der Magnetring 16 bildet dabei eine Winkelcodierung zur Bestimmung des relativen, aber sehr genauen Drehwinkels innerhalb eines Winkelabschnitts des Rotors 12 sowie eine Inkrementcodierung, über die die grobe absolute Drehlage des Rotors 12 bestimmbar ist.

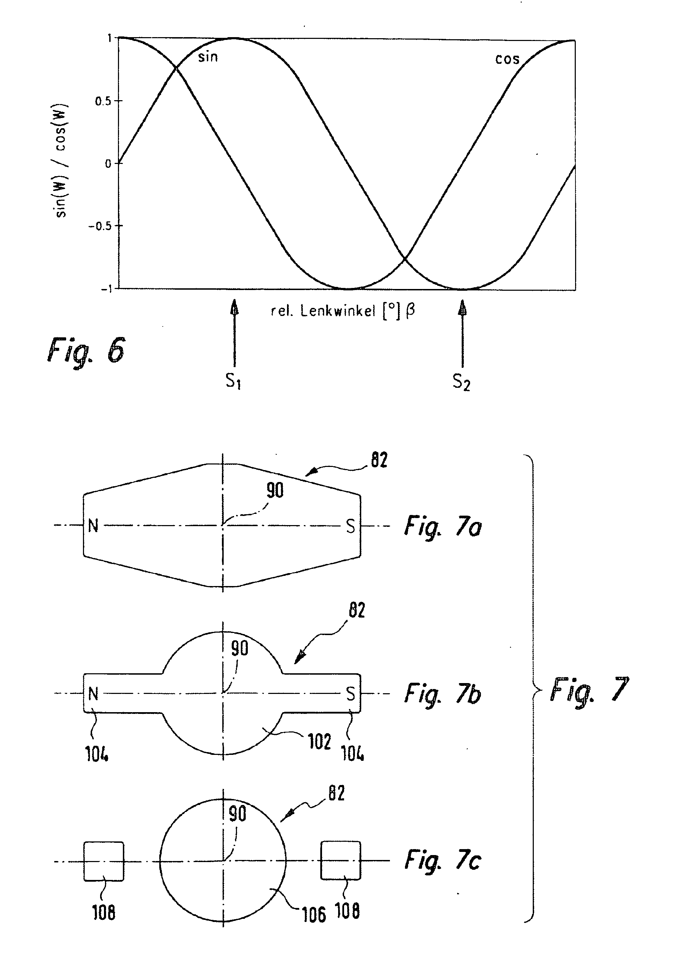

Der Rotor 12 ist an einem Gehäuseteil 20, das gegenüber dem Rotor 12 einen Stator bildet, drehbar angeordnet. Das Gehäuseteil 20 nimmt dabei eine Leiterplatte 22 auf, auf der verschiedene elektronische Bauteile angeordnet sind. Zur Bestimmung des relativen Drehwinkels β sind auf der Leiterplatte 22 zwei analoge Magnetfeldsensoren 23 vorgesehen. Die Magnetfeldsensoren 23 sind zu den einzelnen Magnetsegmenten 18 phasenversetzt angeordnet und erzeugen sinus- und kosinusförmige, zueinander phasenversetzte Ausgangssignale. Derartige Ausgangssignale sind beispielhaft in der Figur 6 wiedergegeben. Aus den Signalverläufen kann der Lenkwinkel innerhalb eines bestimmten Umdrehungsabschnitts, der einen Winkel α zwischen zwei Signalen S der Inkrementcodierung einschließt, eindeutig bestimmt werden.

Zur Bestimmung, innerhalb welchen Abschnitts des Rotors die kosinus- und sinusförmigen Signale abgenommen werden, ist eine Zähleinheit 25 zur Abtastung der vom Magnetring 16 gebildeten Inkrementcodierung auf der Leiterplatte 22 vorgesehen. Die Zähleinheit 25 umfasst dabei ein ferromagnetisches Element 24, das innerhalb eines Spulenkörpers 26 angeordnet ist, um den eine Induktionsschleife in Form einer Spule mehrfach aufgewickelt ist. An den freien Enden des Spulenkörpers 26 sind zwei L-förmige Flusskonzentratoren 30 vorgesehen, mit denen das von den Magnetpolsegmenten 18 ausgehende Magnetfeld zum ferromagnetischen Element hin konzentriert wird. Die Anordnung des ferromagnetschen Elements 24, des Spulenkörpers 26, der Spule 28 und der Flusskonzentratoren 30 ist dabei derart, dass beim Vorbeiführen der Magnetpolsegmente 18 an den freien Enden der Flusskonzentratoren 30 eine schlagartige Ummagnetisierung des ferromagnetischen Elements 24 erfolgt, wodurch an der Induktionsschleife genügend elektrische Energie zur Aktivierung eines in der Figur 1 nicht explizit dargestellten, sich ebenfalls auf der Leiterplatte 22 befindlichen Zählspeicher bereitgestellt wird. Folglich wird bei jedem Wechsel von zwei benachbarten Magnetpolsegmenten 18 mit der Zähleinheit 25 ein Inkrementsignal S generiert. Diese Inkrementsignale S werden im Zählspeicher aufsummiert oder subtrahiert, je nach Drehrichtung des Rotors 12. Aufgrund der Inkrementalzählung ist zu jedem Zeitpunkt die grobe, absolute Drehlage des Rotors bekannt. Zur Bestimmung der Drehrichtung des Rotors ist ein zusätzlicher Magnetfeldsensor 36 vorgesehen.

Aufgrund des Vorsehens des ferromagnetischen Elements wird hierzu keine Fremdenergie benötigt. Die Zähleinheit 25 arbeitet folglich autark und es wird eine Abtastung der Inkrementcodierung bei Umdrehung des Lenkrads selbst bei ausgeschaltener Zündung des Fahrzeugs oder bei abgeklemmter Batterie des Fahrzeugs ermöglicht.

Nach ausgefallener Zündung oder abgeklemmter Batterie kann bei Bereitstellung einer Stromversorgung sofort der absolute Drehwinkel ω des Rotors 12 eindeutig bestimmt werden. Aufgrund der autark arbeitenden Inkrementzählung ist die grobe Drehlage des Rotors sofort bekannt, beziehungsweise es ist bekannt, in welchem Umdrehungsabschnitt sich der Rotor 12 befindet. Aufgrund den beiden kosinus- und sinusförmigen Signale der Magnetfeldsensoren 23 ist zudem sofort der relative Drehwinkel β im entsprechenden Umdrehungsabschnitt bekannt. Mit einer Auswerteeinheit kann daraus kann dann der genaue absolute Lenkwinkel β bestimmt werden.

In der Figur 2 ist das ferromagnetische Element 24 schematisch dargestellt, wobei die Figur 2a einen Querschnitt durch das Element 24 zeigt. Auf dem ferromagnetischen Element 24 ist die Induktionsspule 28 direkt, ohne Zwischenschaltung eines Spulenkörpers, wie es gemäß der Figur 1 der Fall ist, angeordnet. Das ferromagnetische Element ist dabei als Draht ausgebildet, der einen weichmagnetischen Kern 32 und einen hartmagnetischen Mantel 34 aufweist. Der Draht kann dabei als sogenannter Wieganddraht ausgebildet sein.

Aufgrund des weichmagnetischen Kerns 32 und des hartmagnetischen Mantels 34 kann der gewünschte Effekt erzielt werden, dass beim Vorbeiführen eines Magneten im ferromagnetischen Element 24 eine schlagartige Ummagnetisierung erfolgt, bei der genügend elektrische Energie zur Aktivierung des Zählspeichers bereitgestellt wird.

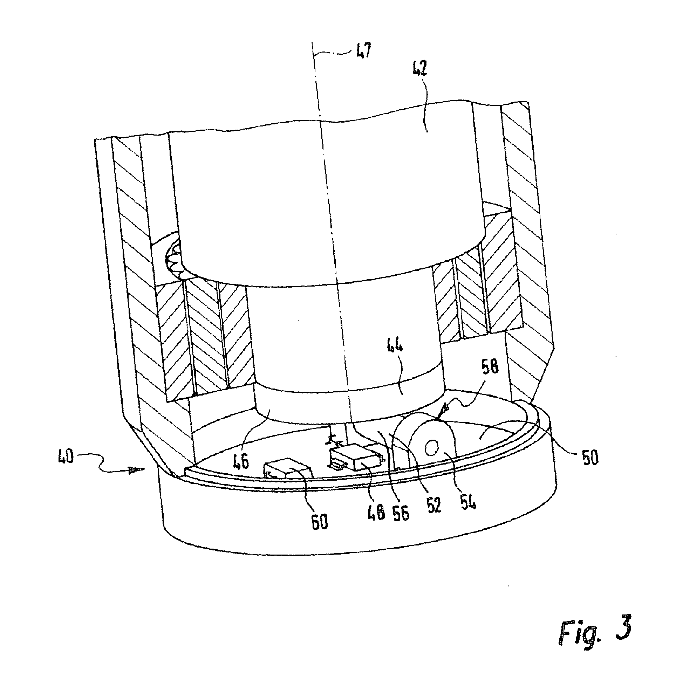

In der Figur 3 ist eine zweite Ausführungsform eines Lenkwinkelsensors 40 dargestellt. Der Lenkwinkelsensor 40 befindet sich dabei an dem freien Ende einer Lenkwelle 42. An dem das freie Ende der Lenkwelle 42 bildenden Rotor 44 sind Magnetabschnitte in Form einer bipolaren Magnetkreisscheibe 46 angeordnet. In Verlängerung der Drehachse 48 der Lenkwelle 42 sieht der Lenkwinkelsensor 40 einen Magnetfeldsensor 48 vor, der zwei nebeneinander angeordnete Sensorabschnitte aufweist. Die beiden Sensorabschnitte liefern dabei zwei zueinander phasenversetzte sinusförmige und kosinusförmige Ausgangssignale, wie sie in der Figur 6 dargestellt sind. Die Winkelcodierung des Rotors 44 wird folglich durch die bipolare Magnetkreisscheibe 46 gebildet.

Neben dem Magnetfeldsensor 48 ist auf einer Leiterplatte 50 ein ferromagnetisches Element 52 angeordnet, das in einem Spulenkörper 54 sitzt, der von einer Spule 56 umwickelt ist. Das ferromagnetische Element 52, der Spulenkörper 54 und die Spule 56 sind dabei Bestandteil einer Zähleinheit 58, mit der die Anzahl der Umdrehungen der Lenkwelle 42 gezählt werden kann. Dazu sieht die Zähleinheit einen nicht dargestellten, auf der Leiterplatte 50 angeordneten Zählspeicher vor. Das ferromagnetische Element 52 und die Spule 56 sind dabei so ausgelegt, dass beim Drehen der Lenkwelle 42, das heißt bei Änderung des magnetischen Feldes im Bereich des ferromagnetischen Elements 52, eine schlagartige Ummagnetisierung des ferromagnetischen Elements 52 erfolgt, wodurch genügend elektrische Energie zur Aktivierung des Zählspeichers bereitstellbar ist. Die Magnetkreisscheibe 46 bildet folglich auch eine Inkrementcodierung, die von der Zähleinheit 58 zur Zählung der Umdrehungen der Lenkwelle 42 abgetastet wird.

Das ferromagnetische Element 52 ist in der Figur 3 zur Drehachse 47 beabstandet angeordnet. Dadurch wird bei einer vollen Umdrehung der Lenkachse 42 das ferromagnetische Element 52 zweimal umpolarisiert, das heißt pro Umdrehung werden zwei Inkrementcodiersignale S generiert. Zur Bestimmung der Drehrichtung des Rotors 44, beziehungsweise der Lenkwelle 42, ist auf der Leiterplatte 15 ein weiterer Magnetfeldsensor 60 vorgesehen.

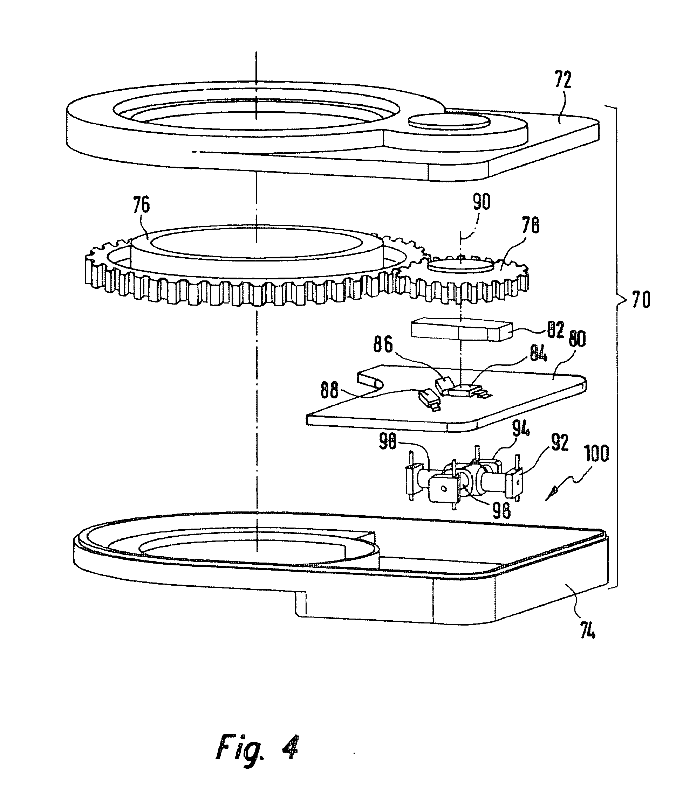

In der Figur 4 ist ein erfindungsgemäßer Lenkwinkelsensor 70 dargestellt, der eine obere Gehäuseschale 72 und eine untere Gehäuseschale 74 aufweist. Die Gehäuseschalen 72 und 74 nehmen einen mit der nicht dargestellten Lenkwelle drehkoppelbaren Antriebsring 76 auf, der einen Rotor 78 antreibt. Die Drehkopplung zwischen Antriebsring 76 und Rotor 78 erfolgt über eine Verzahnung. Die Drehkopplung kann erfindungsgemäß ebenso durch eine Reibkopplung oder dergleichen erfolgen.

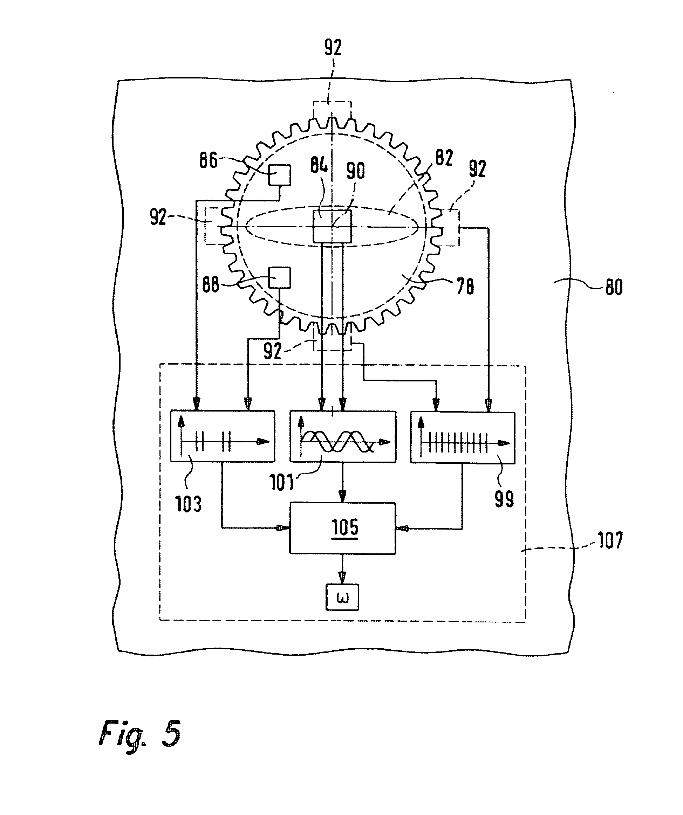

Die Gehäuseschalen 72 und 74 nehmen ferner eine Leiterplatte 80 auf, auf der verschiedene elektronische Bauteile angeordnet sind. Der Rotor 78 sieht auf seiner der Leiterplatte 80 zugewandten unteren Seite eine fest am Rotor 78 anordenbare Magnetanordnung 82 vor. Der Magnetanordnung 82 zugewandt ist auf der Leiterplatte 80 fest angeordnet zum einen ein Magnetfeldsensor 84 und zum anderen zwei bezüglich der Drehachse 90 unter einem Winkel von cirka 90° angeordnete weitere Magnetfeldsensoren 86 und 88. Der Magnetfeldsensor 84 ist dabei als analoger Doppelsensor ausgebildet und liefert bei Drehung der Magnetabschnitte der Magnetanordnung 82 kosinus- und sinusförmige Signale, wie sie in der Figur 6 dargestellt sind. Der Magnetfeldsensor 84 ist dabei vorteilhafterweise im Bereich der Drehachse 90 des Rotors 78 angeordnet. Zur Drehachse 90 beabstandet sind die beiden Magnetfeldsensoren 86 und 88 auf der Leiterplatte 80 angeordnet. Die beiden Magnetfeldsensoren 86 und 88 sind insbesondere digitale Bauteile und dienen zur Drehrichtungserkennung des Rotors 78. Auf der Leiterplatte 80 sind auf der dem Rotor 78 abgewandten Seite zwei Spulenkörper 92 und 94 angeordnet, die jeweils ein ferromagnetisches Element 96 aufnehmen. Um die Spulenkörper 92, 94 sind Induktionsspulen 98 gewickelt. Auf der Leiterplatte 80 ist ferner ein in der Figur 5 mit dem Bezugszeichen 99 dargestellter Zählspeicher vorgesehen, der zusammen mit den Spulenkörpern 92, 94, den ferromagnetischen Elementen 96 und den Spulen 98 eine Zähleinheit 100 bilden. Diese Zähleinheit 100 dient zur Zählung der Umdrehungen des Rotors 78. Beim Drehen des Rotors 78 wird die Magnetanordnung 82 an den ferromagnetischen Elementen 96 vorbeigeführt, wodurch eine schlagartige Ummagnetisierung der ferromagnetischen Elemente erfolgt und an den Spulen genügend elektrische Energie bereitgestellt wird, den nicht dargestellten Zählspeicher zu aktiveren.

Die Magnetanordnung 82 am Rotor 78 bildet dabei folglich zum einen die Winkelcodierung zur Bestimmung des relativen Drehwinkels β innerhalb einer Umdrehung des Rotors 78 und bildet zum anderen eine Inkrementcodierung, die von der Zähleinheit 100 erfasst wird.

Vorteilhafterweise werden beim Lenkwinkelsensor 70 die beiden Magnetfeldsensoren 86 und 88 mit an den Spulen 98 erzeugter elektrischer Energie versorgt, so dass eine Erkennung der Drehrichtung des Rotors 78 ebenfalls unabhängig von einer externen Stromquelle erfolgen kann. Entsprechend können bei den Ausführungsformen gemäß Figur 1, beziehungsweise Figur 3, die Magnetfeldsensoren 36, beziehungsweise 60, von der durch das jeweilige ferromatische Element 24, beziehungsweise 52, induzierten Energie versorgt werden.

In der Figur 5 ist eine Draufsicht auf die Leiterplatte 80 der Figur 4 dargestellt, wobei deutlich zu erkennen ist, dass der Magnetfeldsensor 84 in der Drehachse 90 des Rotors angeordnet ist. Die beiden Magnetfeldsensoren 86 und 88 sind zur Drehachse 90 beabstandet angeordnet und schließen einen Winkel bezüglich der Drehachse 90 von cirka 90° ein.

In der Figur 5 ist der Zellspeicher 99 dargestellt, der von den Spulen 98 aktiviert wird und Inkrementsignale S erzeugt. Ferner ist eine Auswerteeinheit 101 zur Bestimmung relativen Drehwinkels β aus den Signalen des Magnetfeldsensors 84 vorgesehen. Weiterhin ist eine Auswerteeinheit 103 vorgesehen, die die von den digitalen Magnetfeldsensoren erzeugten Signale auswertet. Eine weitere Auswerteeinheit 105 kann dann aus den Ausgangssignalen des Zellspeichers 99 sowie den anderen beiden Auswerteeinheiten 101, 105 den absoluten Lenkwinkel β bestimmen. Sämtliche Einheiten 99, 101, 103 und 105 können in einer zentralen Einheit 107 untergebracht sein. Andererseits ist denkbar, dass die Einheiten 99, 101 und 103 jeweils in die zugehörigen Sensoren integriert sind.

Bei der Ausführungsform gemäß Figur 4 wird die Winkelcodierung und die Inkrementcodierung von der Magnetanordnung 82 gebildet, die am Rotor 78 angeordnet ist. Erfindungsgemäß wäre ebenfalls denkbar, eine zweite Magnetanordnung am Antriebsring 76 vorzusehen, die beispielsweise dann die Winkelcodierung bilden würde. Die Magnetanordnung am Rotor 78 würde dann beispielsweise ausschließlich als Inkrementcodierung Verwendung finden können. Den die Winkelcodierung aufweisenden Rotor würde dann der Antriebsring 76 bilden und der mit 78 bezeichnete Rotor würde dann einen mit dem die Winkelcodierung aufweisenden Rotor drehgekoppelten Drehkörper bilden. Insofern ist nicht zwingend, dass die Winkelcodierung und die Inkrementcodierung am gleichen Bauteil vorzusehen ist.

Die Magnetanordnung 82 gemäß der Figur 4 ist in der Figur 7a in Draufsicht dargestellt. Es handelt sich hierbei um einen länglichen bipolaren Magneten, dessen Mittelpunkt im Bereich der Drehachse 90 liegt. Die beiden Pole sind mit N Nordpol und S Südpol angedeutet.

In der Figur 7b ist eine etwas anders ausgebildete Magnetanordnung dargestellt, die einen zentralen kreisscheibenförmigen Abschnitt 102 und zwei diametral einander gegenüberliegende, sich an den Kreisabschnitt 102 anschließende Fortsätze 104 aufweist. Die Fortsätze 104 sind dabei in Draufsicht weitgehend rechteckig ausgebildet. Eine derartige Anordnung hat den Vorteil, dass der Kreisabschnitt 102 vorteilhaft als Winkelcodierung Verwendung findet und ein gut vom Magnetfeldsensor 84 erfassendes Magnetfeld zur Verfügung stellt. Die beiden Fortsätze 104 sind vorzugsweise von den beiden Magnetfeldsensoren 86 gut erfassbar, mit denen die Drehrichtung des Rotors 78 bestimmbar ist.

In der Figur 7c ist eine weitere vorteilhafte, mehrteilige Magnetanordnung dargestellt und diese umfasst einen separat ausgebildeten, zentral angeordneten Kreisscheibenmagneten 106 und zwei diametral einander gegenüber liegende Einzelmagnete 108. Das Magnetfeld des Kreisscheibenmagneten 106 ist von dem Magnetfeldsensor 84 optimal erfassbar. Die Magnetfelder der beiden Einzelmagnete 108 dienen zur Ansteuerung der vorteilhafterweise digital ausgebildeten Magnetfeldsensoren 86.

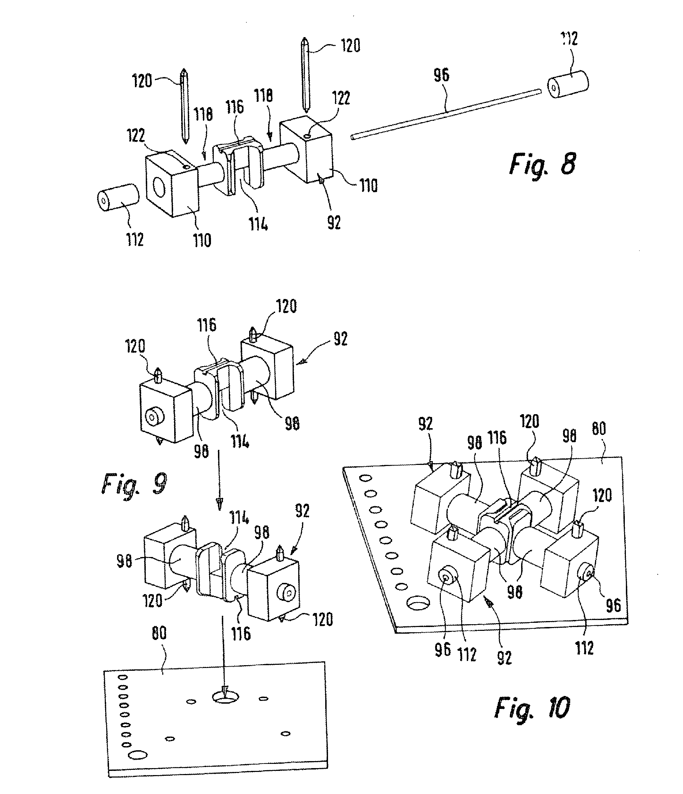

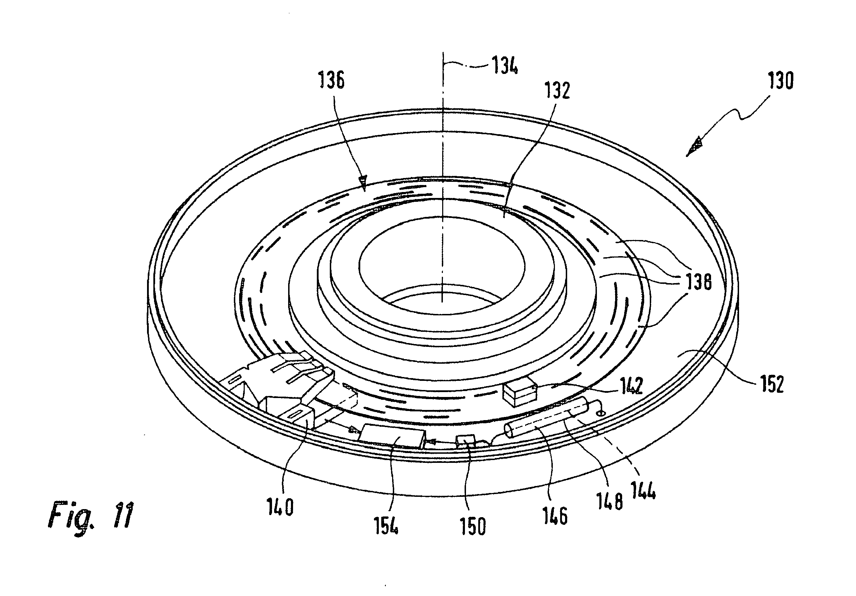

In der Figur 8 ist ein Spulenkörper 92 ohne Spule als Einzelteil dargestellt. Der Spulenkörper 92 ist dabei knochenartig ausgebildet und weist an seinen beiden freien Enden Materialverstärkungen 110 auf. In Längsrichtung weist der Spulenkörper 92 einen zentralen Durchbruch auf, in den das ferromagnetische Element 96 in Form eines Wiegand-Drahtes eingeführt werden kann. Im montierten Zustand sind an den freien Enden des ferromagnetischen Elements 96 Verstärkungselemente 112 angeordnet, die zur besseren Einleitung des von der Magnetanordnung erzeugten Magnetfeldes in das ferromagnetische Element 96 dienen sollen. Die Verstärkungselemente 112 können dabei als Ferritperlen ausgebildet sein, die ein zentrales Loch aufweisen, in das die freien Enden des ferromagnetischen Elements 96 eingesteckt werden können.

Der Spulenkörper 92 sieht in seinem mittleren Bereich eine Ausnehmung 114 vor, in die eine entsprechend ausgebildete Ausnehmung eines anderen Spulenkörpers, wie es in den Figuren 9 und 10 dargestellt ist, eingeführt werden kann. Die Ausnehmung 114 ist im Schnitt U-förmig ausgebildet, wobei an dem mittleren U-Schenkel eine Längsnut 116 vorgesehen ist, in der der nicht dargestellte Spulendraht von einem neben der Ausnehmung 114 angeordneten Spulenkörperabschnitt 18 zu dem auf der anderen Seite der Ausnehmung 114 liegenden Spulenkörperabschnitt 118 geführt werden kann.

Die freien Enden des nicht dargestellten Spulendrahtes enden dabei jeweils in einem Kontaktpin 120, der einen entsprechenden Kontakt auf der in der Figur 4 dargestellten Leiterplatte 80 kontaktieren kann. Die Kontaktpins 120 sind dabei in Bohrungen 122 in den Materialverstärkungen 110 gehalten.

Zwei gleich ausgebildete Spulenkörper 92 können, wie in der Figur 9 und 10 dargestellt ist, so ineinander gesetzt werden, dass ihre ferromagnetischen Elemente 96 weitgehend in einer Ebene liegen. Vorteilhafterweise sind die Ausnehmungen 114 so konturiert, dass die ferroelektrischen Elemente 96 im Wesentlichen senkrecht zueinander angeordnet sind.

Da jeder Spulkörper 92 eine eigene Spule 98 vorsieht, werden beim Vorbeiführen eines Elektromagneten durch die beiden ferromagnetischen Elemente und die zugehörigen Spulen an den Kontaktpins 120 unabhängig elektrische Energie bereitgestellt. Aufgrund der redundanten Anordnung wird die Funktionssicherheit des Systems erhöht.

## Patentansprüche

1. Lenkwinkelsensor (70) zur Bestimmung des absoluten Lenkwinkels (ω) eines Fahrzeugs, mit einem mit einer Lenkwelle oder einem Lenkrad drehgekoppelten Rotor (78), mit einer Abtasteinheit (84) zur Abtastung einer rotorseitigen Winkelcodierung zur Bestimmung eines relativen Drehwinkels (β) und mit einer Zähleinheit (100) zur Abtastung einer Inkrementcodierung, **dadurch gekennzeichnet, dass** die Inkrementkodierung wenigstens einen Magnetabschnitt (82) umfasst und dass die Zähleinheit (100) wenigstens eine Induktionsschleife und ein ferromagnetisches Element (96) und einen Zählspeicher (99) derart umfasst, dass beim Vorbeiführen des Magnetabschnitts (82) an dem ferromagnetischen Element (96) eine schlagartige Ummagnetisierung erfolgt, wodurch an der Induktionsschleife genügend elektrische Energie zur Aktivierung des Zählspeichers (99) bereitgestellt wird, wobei die Induktionsschleife als eine auf einem Spulenkörper angeordnete Induktionsspule (98) ausgebildet ist, wobei das ferromagnetische Element als Impulsdraht ausgebildet ist, der einen weichmagnetischen Kern (32) und einen hartmagnetischen Mantel (34) aufweist, und wobei zwei über Kreuz angeordnete ferromagnetische Elemente (96) vorhanden sind, die jeweils von einer Induktionsspule (98) umgeben sind.

2. Lenkwinkelsensor (70) nach Anspruch 1, **dadurch gekennzeichnet, dass** die ferromagnetischen Elemente (96) jeweils in einem Spulenkörper (92) angeordnet sind, auf den die jeweilige Induktionsspule (98) aufgewickelt ist.

3. Lenkwinkelsensor (70) nach Anspruch 1, **dadurch gekennzeichnet, dass** die Spulenkörper (92) einander zugewandte Ausnehmungen (114) aufweisen, wobei die Spulenkörper (92) so ineinander gesetzt sind, dass die ferromagnetischen Elemente (96) wenigstens weitgehend in einer Ebene liegen.

4. Lenkwinkelsensor (70) nach einem der vorhergehenden Ansprüche, **dadurch gekennzeichnet, dass** weitere elektronische Bauteile (86, 88) mit der von der Induktionsschleife (98) bereitgestellten Energie betrieben werden.

5. Lenkwinkelsensor (70) nach Anspruch 4, **dadurch gekennzeichnet, dass** die weiteren elektronischen Bauteile Drehrichtungssensoren (86, 88) zur Erkennung der Drehrichtung des Rotors (78) umfassen.

6. Lenkwinkelsensor (70) nach Anspruch 5, **dadurch gekennzeichnet, dass** die Drehrichtungssensoren Magnetfeldsensoren (86, 88) umfassen, in deren Erfassungsbereich der Magnetabschnitt (82) bewegt wird.

7. Lenkwinkelsensor (70) nach einem der vorhergehenden Ansprüche, **dadurch gekennzeichnet, dass** die Inkrementcodierung und die Winkelcodierung als lediglich eine ein- oder mehrteilige Magnetanordnung (82) ausgebildet sind und dass die Abtasteinheit Magnetfeldsensoren (84) umfasst.

8. Lenkwinkelsensor (70) nach Anspruch 7, **dadurch gekennzeichnet, dass** die Magnetanordnung (82), die Abtasteinheit (84) und/oder das ferromagnetische Element (96) im Bereich und/oder in Verlängerung der Drehachse (90) des Rotors (78) angeordnet sind.

9. Lenkwinkelsensor (70) nach einem der vorhergehenden Ansprüche, **dadurch gekennzeichnet, dass** eine Leiterplatte (80) vorhanden ist, auf der das ferromagnetische Element, ggf. samt einem zughörigen Spulenkörper und einer Spule, die Abtasteinheit, der Zählspeicher und, falls vorhanden, eine Auswerteeinheit zur Auswertung der Signale der Abtasteinheit und des Zählspeichers angeordnet sind.

10. Lenkwinkelsensor (70), nach einem der vorhergehenden Ansprüche, **dadurch gekennzeichnet, dass** die Abtasteinheit zwei bei Drehung des Rotors Sinus- und Kosinussignale erzeugende Magnetfeldsensoren (82) umfasst, aus denen sich der relative Drehwinkel (β) innerhalb einer Umdrehung oder innerhalb eines Abschnitts der Umdrehung bestimmen lässt.

## Claims

1. Steering angle sensor (70) for determining the absolute steering angle (ω) of a vehicle, having a rotor (78) which is rotationally coupled to a steering shaft or a steering wheel, having a scanning unit (84) for scanning an angle coding on the rotor side in order to determine a relative angle of rotation (β), and having a counting unit (100) for scanning an incremental coding, **characterized in that** the incremental coding comprises at least one magnetic section (82), and **in that** the counting unit (100) comprises at least one induction loop and a ferromagnetic element (96) and a count memory (99) in such a manner that, when the magnetic section (82) is guided past the ferromagnetic element (96), a sudden magnetization reversal takes place, as a result of which sufficient electrical energy for activating the count memory (99) is provided in the induction loop, the induction loop being in the form of an induction coil (98) which is arranged on a coil former, the ferromagnetic element being in the form of a pulse wire having a magnetically soft core (32) and a magnetically hard sheath (34), and two ferromagnetic elements (96) which are arranged in crossed fashion and are each surrounded by an induction coil (98) being provided.

2. Steering angle sensor (70) according to Claim 1, **characterized in that** the ferromagnetic elements (96) are each arranged in a coil former (92) onto which the respective induction coil (98) is wound.

3. Steering angle sensor (70) according to Claim 1, **characterized in that** the coil formers (92) have recesses (114) which face one another, the coil formers (92) being placed into one another in such a manner that the ferromagnetic elements (96) are at least largely in one plane.

4. Steering angle sensor (70) according to one of the preceding claims, **characterized in that** further electronic components (86, 88) are operated using the energy provided by the induction loop (98).

5. Steering angle sensor (70) according to Claim 4, **characterized in that** the further electronic components comprise rotational direction sensors (86, 88) for detecting the direction of rotation of the rotor (78).

6. Steering angle sensor (70) according to Claim 5, **characterized in that** the rotational direction sensors comprise magnetic field sensors (86, 88), in the detection range of which the magnetic section (82) is moved.

7. Steering angle sensor (70) according to one of the preceding claims, **characterized in that** the incremental coding and the angle coding are in the form of only a single-part or multipart magnetic arrangement (82), and **in that** the scanning unit comprises magnetic field sensors (84).

8. Steering angle sensor (70) according to Claim 7, **characterized in that** the magnetic arrangement (82), the scanning unit (84) and/or the ferromagnetic element (96) is/are arranged in the region and/or as an extension of the axis of rotation (90) of the rotor (78).

9. Steering angle sensor (70) according to one of the preceding claims, **characterized in that** a printed circuit board (80) is provided, the ferromagnetic element, if necessary together with an associated coil former and a coil, the scanning unit, the count memory and, if present, an evaluation unit for evaluating the signals from the scanning unit and from the count memory being arranged on said printed circuit board.

10. Steering angle sensor (70) according to one of the preceding claims, **characterized in that** the scanning unit comprises two magnetic field sensors (82) which generate sine and cosine signals when the rotor rotates and which can be used to determine the relative angle of rotation (β) within one revolution or within a portion of the revolution.

## Revendications

1. Détecteur d'angle de direction (70) pour déterminer l'angle de direction absolu (ω) d'un véhicule, comprenant un rotor (78) à couplage rotationnel avec un arbre de direction ou un volant, comprenant une unité d'échantillonnage (84) pour échantillonner un codage d'angle du côté du rotor afin de déterminer un angle de rotation relatif (β) et comprenant une unité de comptage (100) pour échantillonner un codeur incrémental, **caractérisé en ce que** le codage incrémental comprend au moins une portion magnétique (82) et **en ce que** l'unité de comptage (100) comprend au moins une boucle d'induction et un élément ferromagnétique (96) ainsi qu'une mémoire de comptage (99) de telle sorte que lorsque la portion magnétique (82) passe devant l'élément ferromagnétique (96), il se produit une inversion magnétisation brutale, ce qui a pour effet que la boucle d'induction reçoit une énergie électrique suffisante pour activer la mémoire de comptage (99), la boucle d'induction étant configurée sous la forme d'une bobine d'induction (98) disposée sur un corps de bobine, l'élément ferromagnétique étant réalisé sous la forme d'un fil d'impulsion qui présente un noyau magnétique doux (32) et une enveloppe magnétique dure (34), et deux éléments ferromagnétiques (96) disposés en croix étant présents, lesquels sont respectivement entourés par une bobine d'induction (98).

2. Détecteur d'angle de direction (70) selon la revendication 1, **caractérisé en ce que** les éléments ferromagnétiques (96) sont à chaque fois disposés dans un corps de bobine (92) sur lequel est enroulée la bobine d'induction (98) correspondante.

3. Détecteur d'angle de direction (70) selon la revendication 1, **caractérisé en ce que** les corps de bobine (92) présentent des creux (114) qui se font face les uns aux autres, les corps de bobine (92) étant disposés les uns dans les autres de telle sorte que les éléments ferromagnétiques (96) se trouvent au moins pour l'essentiel dans un seul plan.

4. Détecteur d'angle de direction (70) selon l'une des revendications précédentes, **caractérisé en ce que** d'autres composants électroniques (86, 88) sont alimentés avec l'énergie délivrée par la boucle d'induction (98).

5. Détecteur d'angle de direction (70) selon la revendication 4, **caractérisé en ce que** les autres composants électroniques comprennent des capteurs de sens de rotation (86, 88) pour détecter le sens de rotation du rotor (78).

6. Détecteur d'angle de direction (70) selon la revendication 5, **caractérisé en ce que** les capteurs de sens de rotation comprennent des capteurs de champ magnétique (86, 88) dans la zone de détection desquels se déplace la portion magnétique (82).

7. Détecteur d'angle de direction (70) selon l'une des revendications précédentes, **caractérisé en ce que** le codage incrémental et le codage d'angle sont réalisés sous la forme d'un seul arrangement magnétique (82) en une ou plusieurs parties et **en ce que** l'unité d'échantillonnage comprend des capteurs de champ magnétique (84).

8. Détecteur d'angle de direction (70) selon la revendication 7, **caractérisé en ce que** l'arrangement magnétique (82), l'unité d'échantillonnage (84) et/ou l'élément ferromagnétique (96) sont disposés à proximité et/ou dans la prolongation de l'axe de rotation (90) du rotor (78).

9. Détecteur d'angle de direction (70) selon l'une des revendications précédentes, **caractérisé en ce qu'**il existe un circuit imprimé (80) sur lequel sont disposés l'élément ferromagnétique, éventuellement conjointement avec un corps de bobine associé et une bobine, l'unité d'échantillonnage, la mémoire de comptage et, si présente, une unité d'analyse destinée à analyser les signaux de l'unité d'échantillonnage et de la mémoire de comptage.

10. Détecteur d'angle de direction (70) selon l'une des revendications précédentes, **caractérisé en ce que** l'unité d'échantillonnage comprend deux capteurs de champ magnétique (82) qui génèrent, lors de la rotation du rotor, des signaux sinusoïdaux et cosinusoïdaux à partir desquels peut être déterminé l'angle de rotation relatif (β) à l'intérieur d'un tour ou à l'intérieur d'une portion de tour.
